# EUROPÄISCHE PATENTANMELDUNG

(11) **EP 4 663 387 A1**
(43) Veröffentlichungstag der Anmeldung: **17.12.2025**
(21) Anmeldenummer: 24181178.5
(22) Anmeldetag: 10.06.2024
(51) Int. Cl.: B29C 64/295, B29C 64/30, B33Y 30/00

(54) **VERFAHREN UND VORRICHTUNG ZUM HERSTELLEN EINES DENTALOBJEKTS**

(71) Anmelder: Ivoclar Vivadent AG, 9494 Schaan (LI)
(72) Erfinder: Reinhardt, Jonas, 7206 Igis (CH); Niedrig, Christian, 9478 Azmoos (CH); Bitar, Nicola, 9462 Montlingen (CH); Ritzberger, Christian, 9472 Grabs (CH)
(74) Vertreter: Baldus, Oliver

(57) **Zusammenfassung**

Verfahren zum Herstellen eines Dentalobjektes (100), mit den Schritten eines schichtweisen Druckens (S101) des Dentalobjektes mittels eines Herstellungsmaterials und einer Stützstruktur mittels eines schmelzbaren Unterstützungsmaterials; eines Schmelzens (S102) des Unterstützungsmaterials; und eines Aufnehmens (S103) des geschmolzenen Unterstützungsmaterials in dem Herstellungsmaterial des gedruckten Dentalobjektes.

## Beschreibung

Die vorliegende Erfindung betrifft ein Verfahren zum Herstellen eines Dentalobjektes und ein Herstellungssystem zum schichtweisen Herstellen eines Dentalobjektes.

Bei der Herstellung eines Dentalobjektes mittels eines 3D-Druckverfahrens wird das gedruckte Dentalobjekt nach einem Sinterprozess mit hohem Zeitaufwand poliert. Der Polieraufwand ist hierbei groß, weil das Material nach dem Sintern eine viel höhere Härteaufweist. Daher ist es vorteilhaft, das Objekt vor dem Sintern zu polieren. Ein Polieren in diesem Zustand ist einfacher und zeiteinsparender. Die Schichtdicken von Unterstützungs- und Herstellungsmaterial werden hierbei nicht zu dick gewählt, so dass sich die Druckgeschwindigkeit verlangsamt. Durch höhere Druckauflösung vermindert sich die Polierzeit, doch die Druckzeit verlängert sich. Je dünner die Schichten sind, desto geringer die Oberflächenrauigkeit je nach Krümmung.

Es ist die technische Aufgabe der vorliegenden Erfindung, die Herstellung eines Dentalobjektes zu verbessern.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Herstellen eines Dentalobjektes gelöst, mit den Schritten eines schichtweisen Druckens des Dentalobjektes mittels eines Herstellungsmaterials und einer Stützstruktur mittels eines schmelzbaren Unterstützungsmaterials; eines Schmelzens des Unterstützungsmaterials; und eines Aufnehmens des geschmolzenen Unterstützungsmaterials in dem Herstellungsmaterial des gedruckten Dentalobjektes. Das Aufnehmen kann durch Infiltrieren des geschmolzenen Unterstützungsmaterials oder ein automatisches Aufnehmen durch eine unvermeidbare Infiltration durch Kapillarkräfte erreicht werden.

Durch das in der porösen Matrix des Herstellungsmaterials aufgenommene Unterstützungsmaterial wird beispielsweise der technische Vorteil erreicht, dass sich das Dentalobjekt besser handhaben, schleifen und polieren lässt, so dass automatisch eine glattere Oberfläche erzeugt werden kann. Mit dem Verfahren kann beispielsweise Zeit eingespart werden, die normalerweise zum Polieren des gedruckten und anschließend thermisch verdichteten (gesinterten) Dentalobjektes aufgewendet werden muss. Durch die Wachsinfiltration erhält das ungesinterte Dentalobjekt die nötige Grundfestigkeit, die es ermöglicht, die Politur im ungesinterten Zustand vorzunehmen.

In einer technisch vorteilhaften Ausführungsform des Verfahrens umfasst das Herstellungsmaterial ein Oxidkeramik-Material. Dadurch wird beispielsweise der technische Vorteil erreicht, dass ein besonders geeignetes Herstellungsmaterial für Dentalobjekte verwendet wird.

In einer weiteren technisch vorteilhaften Ausführungsform des Verfahrens umfasst das Unterstützungsmaterial Wachs und/oder nicht-ionische Tenside. Je nach ihrer Herkunft teilt man Wachse in drei Hauptgruppen ein: natürliche Wachse, wobei hier wiederum zwischen pflanzlichen und tierischen Wachsen, Mineralwachsen und petrochemischen Wachsen unterschieden wird; chemisch modifizierte Wachse und synthetische Wachse. In der vorliegenden Erfindung werden bevorzugt petrochemische Wachse, wie etwa Paraffinwachs (Hartparaffin), Petrolatum, Mikrowachs (Mikroparaffin) und deren Mischungen, besonders bevorzugt Paraffinwachs verwendet. Auch pflanzliche Wachse, z.B. Candelillawachs, Carnaubawachs, Japanwachs, Espartograswachs, Korkwachs, Guarumawachs, Reiskeimölwachs, Zuckerrohrwachs, Ouricurywachs, Montanwachs;tierische Wachse, z.B. Bienenwachs, Schellakwachs, Walrat, Lanolin (Wollwachs), Bürzelfett; Mineralwachse, z.B. Ceresin, Ozokerit (Erdwachs); chemisch modifizierte Wachse, z.B. Montanesterwachse, Sasolwachse, hydrierte Jojobawachse, oder synthetische Wachse, z.B. Polyalkylenwachse, Polyethylenglykolwachse, verwendet werden. Nicht-ionische Tenside sind z.B. Fettalkoholethoxylate, Fettalkoholpropoxylate, Alkylglucoside, Alkylpolyglucoside, Oktylphenoethoxylate, Nonylphenoethoxylate. Dadurch wird beispielsweise der technische Vorteil erreicht, dass ein niedriger Schmelzpunkt für das Unterstützungsmaterial erreicht wird.

In einer weiteren technisch vorteilhaften Ausführungsform des Verfahrens wird nach dem Schmelzen das Unterstützungsmaterial für eine vorgegebene Infiltrationszeit auf einer vorgegebenen Temperatur gehalten. Auch das Dentalobjekt kann auf dieser Temperatur gehalten werden. Dadurch wird beispielsweise der technische Vorteil erreicht, dass das Eindringen des Unterstützungsmaterials in das poröse Dentalobjekt erleichtert wird. Das poröse Dentalobjekt besteht aus einzelnen Partikeln, die durch das Aufbauen und anschließende Trocknen der einzelnen Schicht zu einem kompakten Formkörper führt.

In einer weiteren technisch vorteilhaften Ausführungsform des Verfahrens wird das Dentalobjekt nach dem Eindringen des Unterstützungsmaterials gekühlt oder die Temperatur des Dentalobjekt abgesenkt. Dadurch wird beispielsweise der technische Vorteil erreicht, dass sich eine Verarbeitungsgeschwindigkeit des Verfahrens erhöht. Der Vorteil des Abkühlens liegt darin, dass eine höhere Festigkeit des gedruckten Dentalobjektes entsteht. Dadurch lässt sich das Dentalobjekt einfacher handhaben und polieren, ohne Risse Abplatzungen oder Beschädigungen zu verursachen.

In einer weiteren technisch vorteilhaften Ausführungsform des Verfahrens wird das Dentalobjekt nach dem Eindringen des Unterstützungsmaterials geschliffen oder poliert. Dadurch wird beispielsweise der technische Vorteil erreicht, dass eine glatte Oberfläche des Dentalobjekts im Grünzustand erzeugt wird.

In einer weiteren technisch vorteilhaften Ausführungsform des Verfahrens werden nach dem Drucken einer Schicht das Herstellungsmaterial und/oder das Unterstützungsmaterial gehärtet und/oder getrocknet. Dadurch wird beispielsweise der technische Vorteil erreicht, dass sich die Herstellung des Dentalobjektes beschleunigt.

In einer weiteren technisch vorteilhaften Ausführungsform des Verfahrens erfolgt das Härten und/oder Trocknen des Herstellungsmaterials und des Unterstützungsmaterials mittels elektromagnetischer Strahlung, Wärme, einem Luftstrom, einer Konvektion, einer Evaporation und/oder einer chemischen Reaktion. Dadurch wird beispielsweise der technische Vorteil erreicht, dass das Härten des Herstellungsmaterials und des Unterstützungsmaterials besonders effizient durchgeführt werden kann.

In einer weiteren technisch vorteilhaften Ausführungsform des Verfahrens dringt das geschmolzene Unterstützungsmaterial nur teilweise in das Dentalobjekt ein. Dadurch wird beispielsweise der technische Vorteil erreicht, dass nur die äußeren Schichten des Dentalobjektes mit dem Unterstützungsmaterial infiltriert werden und Unterstützungsmaterial eingespart werden kann und der Nachfolgeprozess schneller durchgeführt werden kann, wie beispielsweise ein Sintern oder Entbindern.

In einer weiteren technisch vorteilhaften Ausführungsform des Verfahrens umfasst das Unterstützungsmaterial ein Dotiermaterial, das die Eigenschaften des Dentalobjektes beim Sintern verändert. Das Dotiermaterial ist beispielsweise Yttrium, Lanthan, Eisen, Mangan, Chrom, Erbium, Terbium, Praseodym, Neodym, Cobalt, Nickel, Titan in ionisch gelöster Form (wie z. B. Y³⁺, La³⁺, Ce³⁺, Ce⁴⁺, Fe³⁺, Er³⁺) oder als Nanopartikel in Form von Oxiden <100nm (Y₂O₃, Tb₂O₃, Mn₂O₃, Fe₂O₃, Pr₂O₃, Er₂O₃). Dadurch wird beispielsweise der technische Vorteil erreicht, dass sich die optischen Eigenschaften des Dentalobjektes und das Verdichtungsverhalten bei einem anschließenden Sinterprozess nochmal verbessern lassen.

In einer weiteren technisch vorteilhaften Ausführungsform des Verfahrens umfasst das Unterstützungsmaterial Glas- oder Glasurmaterial oder Glas- oder Glasurnanomaterial mit einer mittleren Partikelgröße d₅₀ von 0.01 - 10 µm, bevorzugt 0.01 - 5 µm. Das Glas- oder Glasurmaterial besitzt in einem Temperaturbereich von 950°C - 1300°C eine Viskosität von grösser 10^{2.5} Pa·s auf. In der Regel besitzt das Glas- oder Glasurmaterial bei 1450°C eine Viskosität kleiner 10⁹ Pa·s auf. Bevorzugte Glas- oder Glasurmaterialen weisen bei 950°C eine Viskosität von 10⁴ Pa·s, bevorzugt 10^{5.6} Pa·s und besonders bevorzugt 10⁷ Pa·s auf und bei 1300°C eine bevorzugte Viskosität von 10⁴ Pa·s und/oder bei 1450°C eine Viskosität von weniger als 10⁷ Pa·s und bevorzugt weniger als 10^{5.6} Pa·s. Dadurch wird der technische Vorteil erreicht, dass durch die Kapillarkräfte des gedruckten Dentalobjektes an der Oberfläche eine dünne Schicht des Glas- oder Glasurmaterials bildet und während des finalen Dichtsintern der Dentalobjektes eine dichte Glasurschicht bildet.

In einer weiteren technisch vorteilhaften Ausführungsform des Verfahrens ist das Dentalobjekt eine Krone, eine Brücke, ein Abutment, ein Veneer, ein Inlay, ein Onlay, ein Table-Top, eine Teil- oder Vollprothese. Dadurch wird beispielsweise der technische Vorteil erreicht, dass besonders geeignete Dentalobjekte erzeugt werden.

In einer weiteren technisch vorteilhaften Ausführungsform des Verfahrens erfolgt nach dem Druck das Schmelzen des Unterstützungsmaterials im Drucker oder auf der Bauplattform. Das Infiltrieren oder Schmelzen vom Wachs kann auch außerhalb vom Drucker vorgenommen werden beispielsweise in einem Ofen. Dadurch wird beispielsweise der technische Vorteil erreicht, dass das Unterstützungsmaterial unmittelbar aufgenommen werden kann.

Gemäß einem zweiten Aspekt wird die technische Aufgabe durch ein Herstellungssystem zum schichtweisen Herstellen eines Dentalobjektes gelöst, mit einem Druckkopf zum schichtweisen Drucken des Dentalobjektes mittels eines Herstellungsmaterials und einer Stützstruktur mittels eines schmelzbaren Unterstützungsmaterials; und einer Schmelzeinrichtung zum Schmelzen des Unterstützungsmaterials. Dadurch werden die gleichen technischen Vorteile wie durch das Verfahren nach dem ersten Aspekt erreicht.

In einer technisch vorteilhaften Ausführungsform des Herstellungssystems ist die Schmelzeinrichtung ausgebildet, das Unterstützungsmaterial für eine vorgegebene Infiltrationszeit auf einer vorgegebenen Temperatur zu halten. Dadurch wird beispielsweise der technische Vorteil erreicht, dass das Eindringen des Unterstützungsmaterials in das Dentalobjekt erleichtert wird.

In einer weiteren technisch vorteilhaften Ausführungsform des Herstellungssystems umfasst das Herstellungssystem eine Kühleinrichtung zum Kühlen des Dentalobjekts. Dadurch wird beispielsweise der technische Vorteil erreicht, dass sich die Verarbeitungsgeschwindigkeit des Herstellungssystems verbessert.

In einer weiteren technisch vorteilhaften Ausführungsform des Herstellungssystems umfasst das Herstellungssystem eine Nachbearbeitungseinrichtung zum Schleifen oder Polieren des Dentalobjektes. Dadurch wird beispielsweise der technische Vorteil erreicht, dass sich mit dem Herstellungssystem eine besonders glatte Oberfläche des Dentalobjektes erzeugen lässt.

Ausführungsbeispiele der Erfindung sind in den Zeichnungen dargestellt und werden im Folgenden näher beschrieben.

Es zeigen:
- Fig. 1: eine schematische Ansicht eines Herstellungssystems zum Herstellen eines Dentalobjektes;
- Fig. 2: eine weitere schematische Ansicht des Herstellungssystems zum Herstellen des Dentalobjektes; und
- Fig. 3: ein Blockdiagramm eines Verfahrens zum Herstellen eines Dentalobjektes.

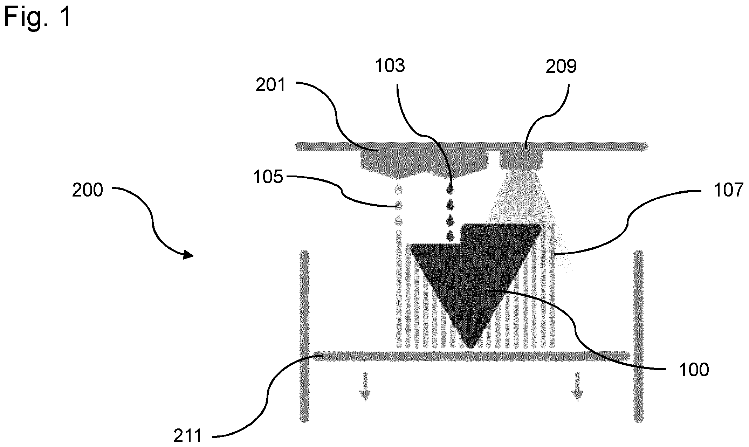

Fig. 1 zeigt eine schematische Ansicht eines Herstellungssystems 200 zum Herstellen eines gedruckten Dentalobjektes 100. Das Dentalobjekt 100 ist beispielsweise eine Krone, eine Brücke, ein Abutment, ein Veneer, ein Inlay, ein Onlay, ein Table-Top, eine Teil- oder Vollprothese. Derartige Dentalobjekte 100, die im Mund eines Patienten implementiert werden, sollten eine glatte Oberfläche aufweisen, da ansonsten ein Tragekomfort gering ist. Eine raue Oberfläche des Dentalobjektes 100 fördert zudem das Wachstum eines unerwünschten Biofilms und Verfärbungen zeigen sich stärker.

Für die Herstellung wird zunächst ein dreidimensionales Modell des gewünschten Dentalobjektes 100 in einem CAD-Programm erstellt und in digitale Schichten (Slices) unterteilt. Jede Schicht stellt einen dünnen horizontalen Querschnitt des Dentalobjekts 100 dar.

Die Software des Herstellungssystems 200, wie beispielsweise ein 3D-Strahldrucker, bereitet die Daten vor und steuert den Druckkopf 201, die Plattform 211 sowie das Unterstützungsmaterial 105 und Herstellungsmaterial 103. Der 3D-Strahldrucker ist beispielsweise ein Inkjet oder MJ-Drucker.

Das Herstellungsmaterial 103, wie beispielsweise ein keramischer Schlicker, dient zum Aufbauen des Dentalobjekts 100. Das Unterstützungsmaterial 105, wie beispielsweise Wachs, dient zum Aufbauen von Stützstrukturen 107, an denen sich Überhänge des Dentalobjektes 100 abstützen können. Das Unterstützungsmaterial 105 wird nach dem Druckprozess entfernt.

Zudem werden Parameter festgelegt, wie beispielsweise eine Druckgeschwindigkeit, eine Schichtdicke und eine Materialzufuhr. Weitere Prozessgrößen sind beispielsweise eine Substrattemperatur, eine Temperatur des Unterstützungsmaterials 105 und eine Temperatur der Trocknungs- oder Verdampfungseinrichtung 209 zur Entfernung eines Lösungsmittels, wie beispielsweise Wasser.

Danach wird in dem Herstellungssystem 200 ein Grünkörper (Green Part) des Dentalobjektes 100 durch schichtweises Auftragen von Tropfen des Herstellungsmaterials 103 erstellt. Der Grünkörper ist das Druckobjekt im Zustand vor dem Sintern. Der Druckkopf 201 bewegt sich hierbei über die Plattform 211 und sprüht winzige Tropfen des Herstellungsmaterials 103 und des Unterstützungsmaterials 105 auf die Oberfläche. Es kann sich auch die Plattform 211 unter dem Druckkopf 201 bewegen.

Der Prozess ähnelt dem herkömmlichen Tintenstrahldruck, bei dem Tintentropfen auf Papier oder eine andere Oberfläche aufgebracht werden. Im 3D-Strahldruckverfahren wird dieser Vorgang jedoch in der dritten Dimension mit dem Herstellungsmaterial 103 wiederholt, um das dreidimensionale Dentalobjekt 100 räumlich herzustellen.

Nach dem Auftragen jeder Schicht werden sowohl das Herstellungsmaterial 103 als auch das Unterstützungsmaterial 105 gehärtet oder getrocknet. Dies kann durch elektromagnetische Strahlung, Wärme, einen Luftstrom mit einstellbarer Temperatur, Feuchte und/oder Geschwindigkeit oder eine chemische Reaktion erfolgen, je nach den spezifischen Eigenschaften der entsprechenden Materialien. Der größte Teil der Trocknung und Verfestigung wird durch Entzug des Wassers aus dem gedruckten Dentalobjekt 100 während des Druckens vollzogen. Nach dem Drucken kann ein gewisser Restwasseranteil aus dem Dentalobjekt 100 noch verdunstet werden, damit eine Infiltration der porösen Struktur möglich ist.

Das Herstellungsmaterial umfasst Oxidkeramik-Partikel, Lösungsmittel, Dispergator und/oder ein Sedimentationsadditiv. Oxidkeramik-Partikel sind beispielsweise Yttriumstabilisiertes Zirkondioxid. Lösungsmittel sind beispielsweise polare und unpolare Lösungsmittel, wie z.B. Wasser, Alkohole, Glykole und deren Mischungen. Ein Dispergator umfasst beispielsweise Carbonsäuren, Amine oder Aminoalkohole. Sedimentationsadditive sind beispielsweise Polysacharide, Cellulose und Derivate.

Nach Abschluss des Druckvorgangs und der Aushärtung wird Unterstützungsmaterial 105 teilweise entfernt. Dies kann durch Temperatur, elektromagnetische Strahlung, erwärmte Luft, Wasser, Lösungsmittel oder mechanisches Entfernen erfolgen.

Beim Drucken eines Dentalobjektes 100 zusammen mit einem Unterstützungsmaterial 105 entsteht jedoch eine raue Oberfläche auf dem gedruckten Dentalobjekt 100. Diese Rauheit der Oberfläche entsteht durch die Quantisierung der gedruckten Voxel oder Schichten. Durch einen Treppeneffekt (Stair-Stepping) führt der Zwischenraum zwischen den Voxeln dazu, dass die Kanten des schichtweise gedruckten Dentalobjekts 100 nicht glatt sind, sondern treppenartig erscheinen. Dadurch wird die Oberfläche des Dentalobjekts 100 uneben und rau.

Dieser Umstand bedingt, dass das Dentalobjekt 100 nach dem Entbinderungs- und Sinterprozess noch einmal geschliffen und poliert wird, um ein angenehmes orales Produkt für den Benutzer zu erhalten. Nach dem Sintern hat die Oxidkeramik des Dentalobjektes 100 eine hohe Festigkeit. Dies macht jedoch das Schleifen und/oder Polieren schwierig und zeitaufwändig. Daher ist ein Vorpolieren im ungesinterten Zustand (Grünzustand) vorteilhaft. Die Vorpolitur reduziert die Zeit und den Aufwand der Endpolitur im dichtgesinterten Zustand um ein Vielfaches.

Zu diesem Zweck wird bei dem Verfahren das schmelzbare Unterstützungsmaterial 105 verwendet. Beim Schmelzen der zuvor gefertigten Stützstrukturen 107 dringt das verwendete Unterstützungsmaterial 105 durch die Kapillarwirkung in das keramische Dentalobjekt 100 teilweise oder vollständig ein und wird in diesem aufgenommen. Bei einer Infiltration nimmt die poröse Keramik des Dentalobjektes 100 das flüssige Unterstützungsmaterial 105 auf, so dass die Hohlräume gefüllt und die Dichte und Festigkeit erhöht werden. Dies gelingt, da das gedruckte Dentalobjekt 100 Porengrößen im Nano- bis Mikrometerbereich aufweist. Bei diesem Verfahren wird das Unterstützungsmaterial 105 nach dem Drucken erhitzt und über eine vorgegebene Infiltrationszeit oberhalb der Schmelztemperatur gehalten, damit das flüssige Unterstützungsmaterial 105 in das gedruckte Dentalobjekt 100 eindringen kann. Dabei bestimmen die Kapillarkräfte, wie tief das flüssige Unterstützungsmaterial 105 in das Dentalobjekt 100 eindringt.

Beim anschließenden Abkühlen des Dentalobjektes 100 erstarrt das im Dentalobjekt 100 verbliebene Unterstützungsmaterial 105. Durch das Erstarren des Unterstützungsmaterials 105 im Dentalobjekt 100 wird dessen Festigkeit erhöht, die ohne Infiltration nicht vorhanden wäre. Diese Festigkeit ermöglicht nun das Vorpolieren der Oberfläche des gedruckten Dentalobjektes 100 ohne Spannungen zu erzeugen, die zu einer Zerstörung des Dentalobjektes 100 führen könnten. Das infiltrierte Dentalobjekt 100 verfügt über eine bessere mechanische Festigkeit, die ein Vorpolieren vor dem Sinterprozess ermöglicht.

Wird hingegen keine Infiltration durchgeführt, weist das gedruckte Dentalobjekt 100 schlechtere mechanische Eigenschaften auf. In diesem Fall können Teile des gedruckten Dentalobjektes 100 abbrechen oder Risse entstehen. Dies führt dazu, dass das gedruckte Dentalobjekt 100 unbrauchbar ist oder eine verminderte Qualität aufweist.

Ein Vorpolieren ist vor dem Sinterprozess effizienter als das vollständige Polieren danach, so dass sich eine Zeiteinsparung bei der Herstellung des Dentalobjektes 100 ergibt. Das Vorpolieren reduziert zudem die Oberflächenrauheit im gedruckten vorläufigen Zustand. Im endgesinterten Zustand braucht daher lediglich eine Feinpolitur durchgeführt zu werden.

Zudem ist es möglich im Unterstützungsmaterial 105 weitere lösliche, ionogene Sintermaterialien, wie beispielsweise Farbstoffe oder andere Substanzen, beizumischen, so dass diese ebenfalls bei der Infiltration des Dentalobjektes 100 aufgenommen werden. Damit ist es beispielsweise möglich, beim Sintern eine äußere transluzentere Schicht in dem Dentalobjekt 100 zu erzeugen oder andere Eigenschaften gezielt einzustellen, wie beispielsweise eine Farbe des Dentalobjektes 100. So ist es ebenfalls möglich, nachträglich Farbverläufe in das gedruckte Dentalobjekt 100 einzubringen.

Durch dieses Verfahren wird eine bessere und schnellere Handhabung der Herstellung erreicht. Es wird weniger Verbrauchsmaterial benötigt, wie zum Beispiel Fräser oder Polierer. Die Nachbearbeitungszeit kann um 80% verringert werden. Werkzeugseitig wird die Lebensdauer eines Diamantfräsers und Polierers um den Faktor 20 verlängert.

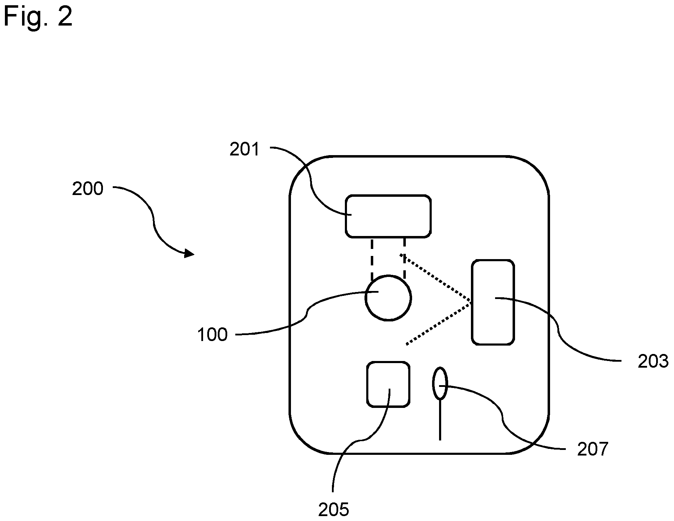

Fig. 2 zeigt eine weitere schematische Ansicht des Herstellungssystems 200 zum schichtweisen Herstellen des Dentalobjektes 100. Das Herstellungssystem 200 umfasst den Druckkopf 201 zum schichtweisen Drucken des Dentalobjektes 100 mittels des Herstellungsmaterials 103 und zum Drucken der Stützstruktur 107 mittels des schmelzbaren Unterstützungsmaterials 105. Bei dieser Herstellung wird das Unterstützungsmaterial 105 mitverdruckt, das sich temperaturabhängig verflüssigen lässt, um die Stützstruktur 107 für überhängende Bereiche zu erzeugen.

Eine Schmelzeinrichtung 203 dient zum anschließenden Schmelzen des Unterstützungsmaterials 105 der Stützstruktur 107. Die Schmelzeinrichtung 203 ist ausgebildet, das Unterstützungsmaterial 105 für eine vorgegebene Infiltrationszeit auf einer vorgegebenen Temperatur zu halten. Die Schmelzvorrichtung ist beispielsweise ein Ofen, eine Heizung oder ein Gebläse.

Zudem umfasst das Herstellungssystem 200 eine Kühleinrichtung 205 zum Kühlen des Dentalobjekts 100. Durch die Kühleinrichtung 205 wird das infiltrierte Unterstützungsmaterial 105 gehärtet, beispielsweise durch Kühlung, um eine feste Matrix innerhalb des Dentalobjektes 100 zu bilden. Es kann auch ein normales Abkühlen auf Raumtemperatur ohne technische Hilfsmittel stattfinden.

Um die Herstellung weiter zu beschleunigen, kann das Herstellungssystem eine Nachbearbeitungsvorrichtung 207 zum Schleifen oder Polieren des Dentalobjektes 100 umfassen. Dadurch wird der Vorteil erreicht, dass alle Arbeitsschritte durch das Herstellungssystem 200 durchgeführt werden können. Die unterschiedlichen Einrichtungen des Herstellungssystem 200 können in einem Gerät vereint sein oder räumlich getrennt an unterschiedlichen Orten angeordnet sein.

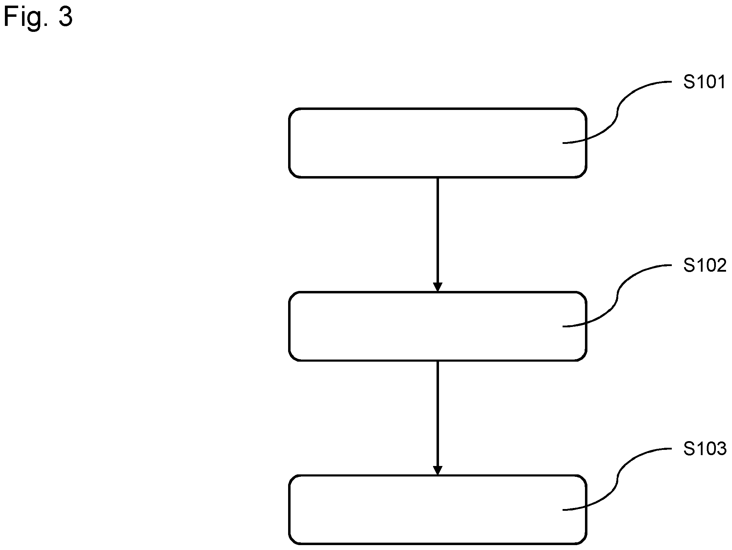

Fig. 3 zeigt ein Blockdiagramm eines Verfahrens zum Herstellen des Dentalobjektes 100. Im Schritt S101 erfolgt ein schichtweises Drucken des Dentalobjektes 100 mittels des Herstellungsmaterials 103 und der Stützstruktur 107 mittels des schmelzbaren Unterstützungsmaterials 105. Im Schritt S102 wird das Unterstützungsmaterial 105 geschmolzen. Die zuvor gedruckte Stützstruktur löst sich hierbei auf. In Schritt S103 wird das geschmolzene und flüssige Unterstützungsmaterial 105 in dem Herstellungsmaterial 103 des gedruckten Dentalobjektes 100 aufgenommen oder aufgesaugt.

Nachdem das Unterstützungsmaterial 105 infiltriert und gehärtet ist, wird die Oberfläche des gedruckten Dentalobjektes 100 vor dem Sintern nachbearbeitet, um die gewünschte Oberflächenbeschaffenheit zu erreichen. Schließlich kann in einer Abschlussbehandlung das fertige Dentalobjekt 100 je nach Anwendungsanforderungen weiteren Prozessen wie Schleifen, Polieren oder Beschichten unterzogen werden, um seine endgültige Form und Oberflächenbeschaffenheit zu erhalten.

Durch das eingedrungene Unterstützungsmaterial 105 wird eine äußere und innere Stützstruktur im Inneren des Dentalobjektes 100 gebildet. Die äußere Stützstruktur stabilisiert die Geometrie oder Außengeometrie und gewährleistet die Formstabilität des Dentalobjektes 100. Die innere Stützstruktur sorgt für eine Erhöhung der Festigkeit des Dentalobjektes 100 und verbessert die gesamte Handhabung, auch dann, wenn die äußere Stützstruktur wieder entfernt wurde.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentalobjekt
- 103: Herstellungsmaterial
- 105: Unterstützungsmaterial
- 107: Stützstruktur

- 200: Herstellungssystem
- 201: Druckkopf
- 203: Schmelzeinrichtung
- 205: Kühleinrichtung
- 207: Nachbearbeitungsvorrichtung
- 209: Trocknungs- oder Verdampfungseinrichtung
- 211: Plattform

## Patentansprüche

1. Verfahren zum Herstellen eines Dentalobjektes (100), mit den Schritten:
- schichtweises Drucken (S101) des Dentalobjektes (100) mittels eines Herstellungsmaterials (103) und einer Stützstruktur (107) mittels eines schmelzbaren Unterstützungsmaterials (105);
- Schmelzen (S102) des Unterstützungsmaterials (105); und
- Aufnehmen (S103) des geschmolzenen Unterstützungsmaterials (105) in dem Herstellungsmaterial (103) des gedruckten Dentalobjektes (100).

2. Verfahren nach Anspruch 1, wobei das Herstellungsmaterial (103) ein Oxidkeramik-Material umfasst.

3. Verfahren nach einem der vorangehenden Ansprüche, wobei das Unterstützungsmaterial (105) Wachse und/oder nichtionische Tenside umfasst.

4. Verfahren nach einem der vorangehenden Ansprüche, wobei nach dem Schmelzen das Unterstützungsmaterial (105) für eine vorgegebene Infiltrationszeit auf einer vorgegebenen Temperatur gehalten wird.

5. Verfahren nach einem der vorangehenden Ansprüche, wobei das Dentalobjekt (100) nach dem Eindringen des Unterstützungsmaterials (105) gekühlt wird oder die Temperatur des Dentalobjekt (100) abgesenkt wird.

6. Verfahren nach einem der vorangehenden Ansprüche, wobei das Dentalobjekt (100) nach dem Eindringen des Unterstützungsmaterials (105) geschliffen oder poliert wird.

7. Verfahren nach einem der vorangehenden Ansprüche, wobei nach dem Drucken einer Schicht das Herstellungsmaterial (103) und/oder das Unterstützungsmaterial (105) gehärtet und/oder getrocknet werden.

8. Verfahren nach Anspruch 7, wobei das Härten und/oder Trocknen des Herstellungsmaterials (103) und des Unterstützungsmaterials (105) mittels elektromagnetischer Strahlung, ultraviolettem Licht, Wärme, einem Luftstrom, einer Konvektion, einer Evaporation und/oder einer chemischen Reaktion erfolgt.

9. Verfahren nach einem der vorangehenden Ansprüche, wobei das geschmolzene Unterstützungsmaterial (105) nur teilweise in das Dentalobjekt eindringt.

10. Verfahren nach einem der vorangehenden Ansprüche, wobei das Unterstützungsmaterial (105) ein Dotiermaterial umfasst, das die Eigenschaften des Dentalobjektes beim Sintern verändert oder das Unterstützungsmaterial (105) umfasst Glas- oder Glasurmaterial.

11. Verfahren nach einem der vorangehenden Ansprüche, wobei das Dentalobjekt (100) eine Krone, eine Brücke, ein Abutment, ein Veneer, ein Inlay, ein Onlay, ein Table-Top, eine Teil- oder Vollprothese ist.

12. Herstellungssystem (200) zum schichtweisen Herstellen eines Dentalobjektes (100), mit:
einem Druckkopf (201) zum schichtweisen Drucken des Dentalobjektes (100) mittels eines Herstellungsmaterials (103) und einer Stützstruktur (107) mittels eines schmelzbaren Unterstützungsmaterials (105); und
einer Schmelzeinrichtung (203) zum Schmelzen des Unterstützungsmaterials (105).

13. Herstellungssystem (200) nach Anspruch 12, wobei die Schmelzeinrichtung (203) ausgebildet ist, das Unterstützungsmaterial (105) für eine vorgegebene Infiltrationszeit auf einer vorgegebenen Temperatur zu halten.

14. Herstellungssystem (200) nach Anspruch 13, wobei das Herstellungssystem (200) eine Kühleinrichtung (205) zum Kühlen des Dentalobjekts (100) umfasst.

15. Herstellungssystem (200) nach einem der Ansprüche 12 bis 14, wobei das Herstellungssystem (200) eine Nachbearbeitungseinrichtung (207) zum Schleifen oder Polieren des Dentalobjektes (100) umfasst.

## Geänderte Patentansprüche

### Geänderte Patentansprüche gemäss Regel 137(2) EPÜ.

1. Verfahren zum Herstellen eines Dentalobjektes (100), mit den Schritten:
- schichtweises Drucken (S101) des Dentalobjektes (100) mittels eines Herstellungsmaterials (103) und einer Stützstruktur (107) mittels eines schmelzbaren Unterstützungsmaterials (105), das Wachse und/oder nichtionische Tenside umfasst;
- Schmelzen (S102) des Unterstützungsmaterials (105); und
- Aufnehmen (S103) des geschmolzenen Unterstützungsmaterials (105) in dem Herstellungsmaterial (103) des gedruckten Dentalobjektes (100);
wobei das Dentalobjekt (100) nach einem Eindringen des Unterstützungsmaterials (105) gekühlt wird oder die Temperatur des Dentalobjekts (100) abgesenkt wird; und wobei das Dentalobjekt (100) nach dem Eindringen des Unterstützungsmaterials (105) geschliffen oder poliert wird.

2. Verfahren nach Anspruch 1, wobei das Herstellungsmaterial (103) ein Oxidkeramik-Material umfasst.

3. Verfahren nach einem der vorangehenden Ansprüche, wobei nach dem Schmelzen das Unterstützungsmaterial (105) für eine vorgegebene Infiltrationszeit auf einer vorgegebenen Temperatur gehalten wird.

4. Verfahren nach einem der vorangehenden Ansprüche, wobei nach dem Drucken einer Schicht das Herstellungsmaterial (103) und/oder das Unterstützungsmaterial (105) gehärtet und/oder getrocknet werden.

5. Verfahren nach Anspruch 4, wobei das Härten und/oder Trocknen des Herstellungsmaterials (103) und des Unterstützungsmaterials (105) mittels elektromagnetischer Strahlung, ultraviolettem Licht, Wärme, einem Luftstrom, einer Konvektion, einer Evaporation und/oder einer chemischen Reaktion erfolgt.

6. Verfahren nach einem der vorangehenden Ansprüche, wobei das geschmolzene Unterstützungsmaterial (105) nur teilweise in das Dentalobjekt eindringt.

7. Verfahren zum Herstellen eines Dentalobjektes (100), mit den Schritten:
- schichtweises Drucken (S101) des Dentalobjektes (100) mittels eines Herstellungsmaterials (103) und einer Stützstruktur (107) mittels eines schmelzbaren Unterstützungsmaterials (105);
- Schmelzen (S102) des Unterstützungsmaterials (105); und
- Aufnehmen (S103) des geschmolzenen Unterstützungsmaterials (105) in dem Herstellungsmaterial (103) des gedruckten Dentalobjektes (100);
wobei das Unterstützungsmaterial (105) ein Dotiermaterial umfasst, das die Eigenschaften des Dentalobjektes beim Sintern verändert oder das Unterstützungsmaterial (105) Glas- oder Glasurmaterial umfasst.

8. Verfahren nach einem der vorangehenden Ansprüche, wobei das Dentalobjekt (100) eine Krone, eine Brücke, ein Abutment, ein Veneer, ein Inlay, ein Onlay, ein Table-Top, eine Teil- oder Vollprothese ist.
